# EUROPEAN PATENT APPLICATION

(11) **EP 4 815 373 A2**
(43) Date of publication of application: **30.09.2026**
(21) Application number: 26199263.0
(22) Date of filing: 13.07.2022
(51) Int. Cl.: H04L 9/40

(54) **DATA ACCESS TO A FEDERATED STORAGE**

(62) Document number(s) of the earlier application(s) in accordance with Art. 76 EPC: 24219928.9 / 4 521 285; 22184820.3 / 4 307 151
(71) Applicant: Helsing GmbH, 81671 Munich (DE)
(72) Inventor: FINK, Robert, 81671 Munich (DE); ADLER, Antonia, 81671 Munich (DE); PFEIFFER, Simon, 81671 Munich (DE); LINGEMANN, Stephanie, 81671 Munich (DE); KRAH, Moritz, 81671 Munich (DE)
(74) Representative: Rummler, Felix

(57) **Abstract**

There is provided a method and device for enabling data access to a federated storage, the method comprising: receiving, from a client device operating in a first computing environment, a request for a data set stored in the federated storage, wherein the data set includes one or more data subsets; determining a first classification level of the first computing environment and a respective second classification level of one or more second computing environments, the one or more data subsets of the requested data set each being stored in a corresponding storage location in one of the one or more second computing environments; based on the determined first and one or more second classification levels, in particular based on a comparison of the first and one or more second classification levels, enabling or denying access to the one or more data subsets of the requested data set for the client device.

## Description

### BACKGROUND OF THE INVENTION

Many collaborative IT projects require secure and flexible storage of, as well as access to, data with different classification levels. According to the respective classification levels, data may be stored in different infrastructures having different classification levels that restrict how data can be persisted in or flow across classification boundaries. This is particularly true for projects that involve partners in the military or defence domain. For example, some partners may be allowed to access a less classified data set or subset while they may not access a more classified data subset stored in a dedicated environment. Existing approaches to enable data access across computing environments with different classification levels and correspondingly varying infrastructures either compromise security, flexibility, or user-friendliness, resulting in collaborative projects being unduly cumbersome, time-consuming or insecure, which can have severe consequences. Therefore, there is a need for methods and systems that provide data storage and connectivity infrastructures for varying classification levels within a federated storage to enable secure and user-friendly data access.

### SUMMARY

In general, different data subsets of a data set stored in a federated storage may be stored at different storage locations underlying different classification levels or security requirements. For example, meta data of a data set, such as the name, description or creation date, may be stored at a storage location underlying a relatively low classification level, whereas secret content data, also referred herein simply as data, of the data set may be stored at a storage location underlying a relative high classification level. As a further example, the data subsets may be stored partly in files and partly in a database, in a cloud computing system and/or on-premises computing systems, as well as with varying access restrictions. Thereby, data ownership and access control can be ensured, whilst preventing less classified data to be stored in a more classified environment than necessary. This is of particular interest for machine learning, ML, project collaborations where, for example, meta data of a training data set is less classified and is also to be exposed to users for data discovery even if they cannot access the training data itself. In that manner, users are enabled to access, research, and reference data sets even if they cannot access the underlying data directly. In contrast, a system where less classified meta data was stored in a more classified environment (due to the related data's classification level) unnecessarily restricts user access to less classified meta data, thus hindering collaboration.

A client requesting a data set, subsets of which are stored in different computing environments, may or may not have access to one or more of the data subsets and may need to connect to the respective computing environments in order to access the respective data subset. Beyond that, some of the data subsets may be classified such that a data transfer of one of the classified computer environments to another, in particular to less classified computing environments, may be prohibited or only allowed under specific circumstances, regulated, for example, by law. Put another way: Strict and complex security requirements or access rules have to be considered when requesting access to a data set comprising one or more content data subsets and/or meta data subsets, in particular stored in different computing environments with different classification levels.

The present invention aims to fulfil said security requirements whilst enabling efficient and user-friendly access to the requested data.

According to one of many embodiments, a computer implemented method is provided for enabling data access to a federated storage. The method includes: receiving from a client device operating in a first computing environment, a request for a data set stored in the federated storage, wherein the data set includes one or more data subsets; determining a first classification level of the first computing environment and a respective second classification level of one or more second computing environments, the one or more data subsets of the requested data set each being stored in a corresponding storage location in one of the one or more second computing environments; based on the determined first and one or more second classification levels, in particular based on a comparison of the first and one or more second classification levels, enabling or denying access to the one or more data subsets of the requested data set for the client device.

The first and second computing environments may be different computing environments having different classification levels that may be, e.g. virtually and/or physically, separated from each other to prevent data transmission from one environment to the other. Alternatively, the first and second computing environments may be the same computer environment or have the same classification level. In other words, all or some of the data subsets' storage location(s) may be located in a respective different computing environment having the same or different classification levels than the client device. Alternatively, all or some of the data subsets' storage location(s) may located in the same computing environment in which the client device operates.

For example, the data set may include a single data subset, i.e. the subset corresponds to the data set. The single data subset may be a meta data subset or a content data subset. In other words: Only a meta data subset or a content data subset may be requested. Alternatively, the data set may include a plurality of data subsets, such as a meta data subset and a content data subset. In one example, the meta data subset may be stored in a less classified computing environment, the content data subset may be stored in a more classified computing environment (i.e. in two different second computing environments). If the first computing environment in which the client device operates corresponds to the less classified computing environment (e.g. be the same computing environment or have the same classification level), the client device may only access the meta data subset. If the first computing environment corresponds to the more classified computing environment (e.g. be the same computing environment or have the same classification level), the client device may access both the meta data subset and the content data subset.

Enabling or having access to data or subsets of data as described herein may include enabling or having read access and/or write access.

Enabling or denying access to the one or more data subsets depending on the classification level of the first and second computing environments, i.e. the computing environment of the client device and the computing environment of the one or more data storage locations, an efficient and secure decision making process for enabling data access is provided.

Moreover, secure data storage is facilitated by storing classified data in a respectively classified computing environment, whilst storing open data in a less or not classified computing environment. Beyond that, the resulting federated storage allows organisations to integrate and administer any storage infrastructure, supporting strong data ownership, access control, and compliance across data classification levels that may range from open to secret.

According to another embodiment, enabling access to the one or more data subsets further includes: based on the determined first and one or more second classification levels, determining a respective communication path from the one or more second computing environments to the first computing environment and/or from the corresponding storage locations to the client device; and enabling access to the one or more data subsets of the requested data set for the client device via the determined respective communication paths.

A communication path may be determined by, e.g., selecting a communication path from a plurality of communication paths, establishing a communication path or defining a communication path, in particular via a number of communication nodes.

In the above-mentioned example, if the first computing environment corresponds to the less classified computing environment, the meta data subset may be accessed via an open communication path and the content data subset may be accessed via a secure communication path.

Put another way: Whilst data access may be enabled via an open communication path within one computing environment or between computing environments having the same (in particular lowest) classification level, specific secure communication paths may be provided to enable data access between different computing environments having different classification levels or the same (relatively high) classification level to ensure data security. For example, data access from a storage location within a more classified computing environment to a client device within a less classified environment may be enabled via an encrypted and/or Virtual Private Network (VPN) channel. By enabling data access via a dedicated communication path depending on the determined classification levels, efficient data access is enabled whilst meeting security requirements.

According to another embodiment enabling or denying access to the one or more data subsets of the requested data set includes: selectively enabling or denying access to each of the one or more data subsets, in particular selectively enabling access to data subsets stored in different computing environments having different classification levels via different communications paths.

In other words, depending on the classification level of the computing environment in which a specific data subset of one or more data subsets is stored, the specific data subset may or may not be accessed and, if so, may be accessed via a communication channel fulfilling security requirements determined based on the first and/or respective second classification level.

Put differently: The client device may directly access data subsets stored in the same computing environment where the client device is operating, whilst dedicated, e.g. secure, communication paths are chosen for data transfer across classification level boundaries. Additionally, or alternatively, access to one or more of the data subsets may be denied, whilst access to at least one other data subset may be enabled. Hence, a client may be provided with all accessible data subsets, where appropriate via different communication channels, based on one single data request.

According to another embodiment, the method further includes: determining a respective access restriction to the corresponding storage locations, in particular to the one or more data subsets; wherein enabling or denying access to the one or more data subsets of the requested data set for the client device is further based on the determined access restrictions.

For example, the data set or one or more of the data subsets are subject to respective access restrictions. Hence, prior to enabling access to the data or data subsets, an authentication process of the client device and/or the user of the client device is performed. In that manner, an additional security mechanism is provided that may be independent of the classification levels of the computing environment.

According to another embodiment, a determined respective communication path, or the determined respective communication path, between the one or more second computing environments and the first computing environment and/or between the corresponding storage location and the client device includes a secure channel, in particular if the respective second classification level is higher than the first classification level or vice versa..

The secure channel may include an encrypted channel and/or a VPN tunnel. In that manner, data stored in a more classified environment may be (temporarily/transiently) accessed by a client device operating in a less classified environment via the secure channel.

According to another embodiment, a determined respective communication path, or the determined respective communication path, between the one or more second computing environments and the first computing environment and/or between the corresponding storage locations and the client device includes a filter device configured to prevent access to, preferably predefined, confidential information included in the request and/or the requested data set, in particular if the respective second classification level is higher than the first classification level or vice versa.

In other words, even if, in general, data transfer, in particular data access, to a storage location in a more classified environment from a less classified environment may be possible via a determined (secure) communication path, the intermediary filter device may additionally search for particular secret information or data within the data to be accessed. Moreover, said communication path may be used to transmit data request from a more classified environment to a less classified environment, preventing the request from transmitting confidential information. Thereby, an additional security mechanism is provided that may be specifically and easily adjusted to the content of secret data.

According to another embodiment, wherein a determined respective communication path, or the determined respective communication path, between the one or more second computing environments and the first computing environment and/or between the corresponding storage locations and the client device includes a data diode preventing data transmission from a more classified computing environment to a less classified computing environment, in particular if the respective second classification level is higher than the first classification level or vice versa.

The data diode may provide a one-way communication path that transmits data only in one direction, in particular only from an computing environment with a relatively low communication level (e.g. a computing environment having stored therein meta data or open data) to an computing environment with a relatively high communication level (e.g. the client devices' computing environment). Thereby, data security is enhanced.

According to another embodiment, enabling access to the one or more data subsets of the requested data set includes: combining a plurality of data subsets (one or more meta data subsets and/or one or more content data subsets), in particular data subsets retrieved from different second computing environments; and enabling access to the combined data subsets.

For example, open meta data is stored in a less classified environment, whereas secret meta data is stored in a more classified environment. By combining the open and secret meta data to one subset of meta data prior to enabling access to the combined meta data for the client device, a user of the client device may not even be aware of the different storage locations of the data subsets having different classification levels (and are thus stored in computing environments having different classification levels). In other words, complex access restrictions based on different classification levels of different data subsets are handled in the background, thereby increasing efficiency and enhancing user friendliness of the data access.

According to another, possibly independent embodiment, there is provided a federated storage access device or system comprising means for carrying out one of the above described methods.

The federated storage access device may include or provide a data access interface, such as a software development kit (SDK), allowing a user of the client device to transmit a request for the data set and receive the data set, one or more data subsets of the data sets and/or combined data subsets of the data set. Thereby, individual connectivity methods to one or more data subsets is unified and abstracted by the federated storage access device, thereby enhancing efficiency of data access within a federated storage system comprising different computing environments having respectively different classification levels.

According to another, possibly independent embodiment, there is provided a computer-readable medium comprising instructions which, when executed by a computer, in particular by the federated storage access device, cause the computer to carry out one of the above described methods.

### BRIEF DESCRIPTION OF THE DRAWINGS

The present invention may be better understood from reading the following description of non-limiting embodiments, with reference to the attached drawings, wherein:
Fig. 1 shows a flowchart of a method for enabling or denying data access to a federated storage;
Fig. 2-7 schematically show different embodiments of federated storage environments and communication channels included therein.

### DETAILLED DESCRIPTION OF THE PREFERRED EMBODIMENTS

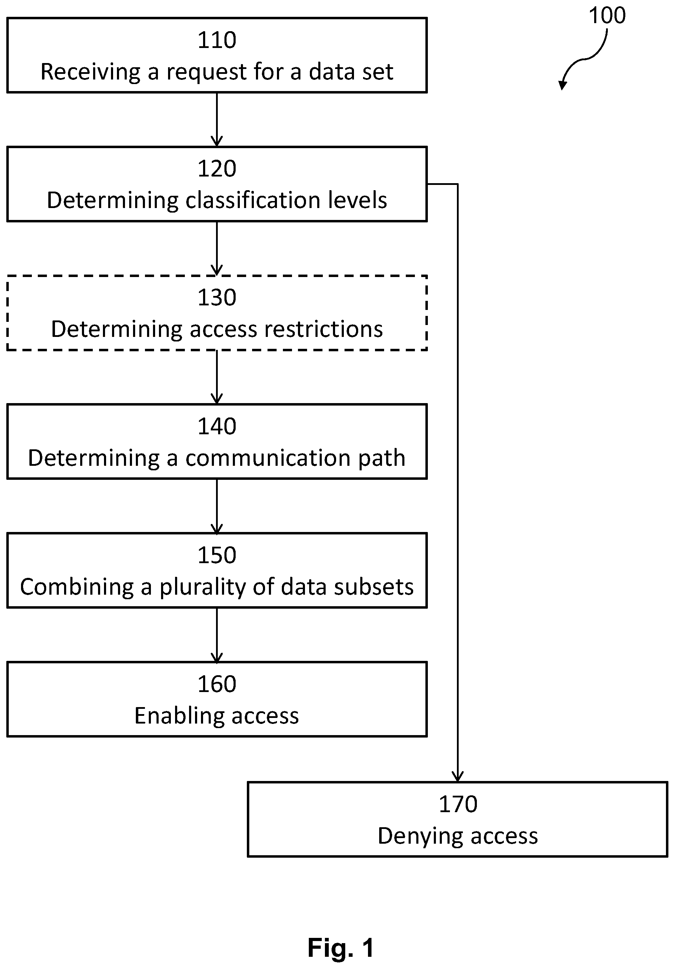

**Figure 1** shows a flowchart of a method 100 for enabling or denying data access to a federated storage. The federated storage includes storage locations/data storages located in one or more computing environments. A plurality of computing environments may include different computing environments having different classification levels. The different computing environments may be separated by virtual and/or physical boundaries, such that communication (or at least open communication) between said different computing environments is prevented. The different computing environments may include respective different computing devices representing a computing infrastructure. The different computing environments may be located in different countries, for example. Some data, data sets or data subsets may be restricted from flowing through specific countries or regions.

As mentioned above, each of the computing environments has a respective classification level associated therewith. Some of the computing environments may have a different classification level or the same classification level. The classification levels may reach, for example, from none classified (or "open") over moderately classified, for example VS-NfD ("nur für den Dienstgebrauch") or FOUO ("For Official Use Only"), to highly classified (e.g. "geheim" or "secret"). In other words, relative to a second computing environment, a first computing environment may be less or more classified, or put differently, relatively low classified or relatively high classified.

Generally, meta data and data may be stored in different computing environments to support data ownership and access control while counteracting less classified data storage in a more classified environment than necessary. Depending on the classification of the respective data subsets and classification laws in a particular jurisdiction, meta data and underlying data may be stored only in a subset of accessible computing environments, fulfilling respective security requirements. The meta data may be included in a data catalog, the data may be included in a bucket.

The method starts at step 110, in which a request for a data set stored in the federated storage is received from a client device. The client device is located in a first computing environment having a first classification level. The requested data set includes one or more data subsets. The data subsets may be stored in respective different second computing environments, or may all be stored in the same second computing environment. For example, the data subsets include a first data subset including meta data of the data set and a second data subset including content data (also referred to as data). In some embodiments, the meta data of the data set may be stored in a less classified computing environment, whereas the (confidential) content data of the data set may be stored in a more classified computing environment, i.e. a computing environment with a higher classification level.

In step 120, a first classification level of the first computing environment, from which the client device has sent the request in step 110, is determined. Moreover, one or more second computing environments are determined in which the data subsets of the requested data set are stored. In response thereto, one or more respective second classification levels of the one or more second computing environments are determined. Some or all of the one or more second computing environments may correspond to the first computing environment or to computing environments different from the first computing environment.

Based on the determined first and one or more second classification levels, access to the requested data set, more particular to the data subsets of the data set, is enabled in step 160 or denied in step 170. The decision, whether or not the access is enabled or denied, may be selectively made for each of the data subsets. In other words, data access may be enabled to some of the data subsets, whereas data access may be denied to others of the data subsets.

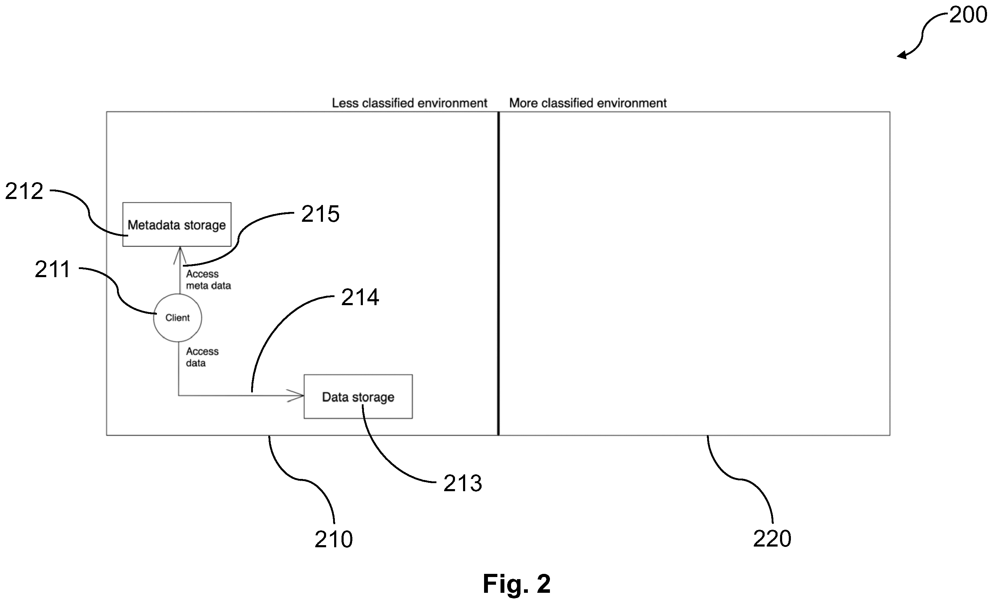

**Figure** 2 schematically shows a first federated storage environment 200. The federated storage environment 200 includes a less classified computing environment 210 and a more classified computing environment 220.

In the illustrated example, a client device 211 is located (i.e. operates) in the less classified, e.g. open, computing environment 210. The client device 211 requests a data set that includes a meta data subset stored in meta data storage 212 and a content data subset stored in data storage 213.

Upon determining that the classification levels of the computing environments in which the requesting client device and the requested data subsets are stored are the same, access to both the meta data storage 212 and data storage 213 is enabled for the client device 211 via direct or open communication channels 214 and 215. In other words, open meta data and open data may be accessed directly.

In the illustrated example, the client device 211, the meta data storage 212 and the data storage 213, are all located within the less classified computing environment 210. In this case, the determination that the client device 211, the meta data storage 212 and the data storage 213 are all located within computing environments having the same classification levels may include (or be performed by) determining that the client device 211, the meta data storage 212 and the data storage 213, are all located within the same classified computing environment. However, in another embodiment, at least one of the meta data storage 212, the client device 211 and the data storage 213 may be located in a different computing environment having the same classification level.

As for all of the methods described herein, the client device 211 or any other client device may implement or use a data access interface, in particular a data access interface provided by a data access device or system, to request and receive data sets and/or data subsets.

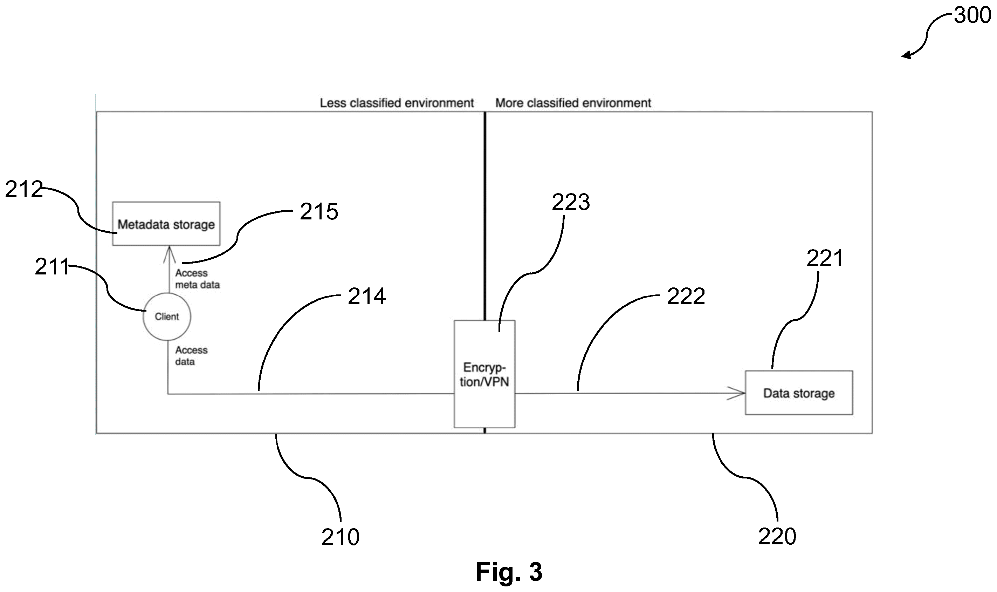

Referring now to **figure 3****,** in which a federated storage environment 300 is shown. The same reference numerals are used for the same or similar features. In contrast to the federated storage environment 200 shown in figure 2, the federated storage environment 300 shown in figure 3 includes a data storage 221 located in the more classified computing environment 220 instead of the data storage 213. In the present example, the less classified computing environment 210 may be an open computer environment, the more classified computing environment 220 may be a FOUO classified computing environment.

Referring again to steps 160 and 170, as described with reference to **figure 1****,** access for the client device 211 to the meta data subset stored in the meta data storage 212 may be enabled, whilst access to the data stored in the data storage 221 may be denied in response to a determination performed in step 120 of figure 1 that the data storage 221 is located in a more classified computing environment relative to the computing environment in which the client device operates. In particular, the determination performed in step 120 may include the step of comparing the classification levels of the less classified environment 210 and the more classified environment 220. In this way, access to the data storage 221 may be denied if the difference between the classification levels of the less classified environment 210 and the more classified environment 220 exceeds a predetermined threshold. On the other hand, if a determined difference between the classification levels does not exceed the predetermined threshold, access to the data storage 221 may be enabled. Alternatively, or additionally, the classification level of the more classified computing environment itself may indicate that data access to the more classified computing environment from a less classified computing environment is allowed, prohibited or only allowed for specific data and/or via specific communication paths.

Additionally, in an optional step 130, prior to enabling access to any of the data subsets of the requested data set, a respective access restriction to the data subsets, or to the respective storage locations of the data subsets, is determined. In response thereto, access to the data subsets is selectively enabled, based on whether or not the requesting client device or a user of the requesting client device is authorised to access the data subsets or the storage locations of the data subset.

In response to the determination performed in step 120 that at least one requested data subset is stored in a more classified environment, whereas the requesting client device operates in a less classified environment, a secure communication path 222 from the data storage 221 to the client device 211 is determined. The secure communication path 222 may include an encrypted channel or a VPN tunnel 223.

In that manner, the client device 211 may access both open meta data stored in meta data storage 212 and classified data stored in data storage 221, wherein the classified data is transferred, in particular transiently transferred, from the more classified environment to the less classified environment via the secure communication path 222.

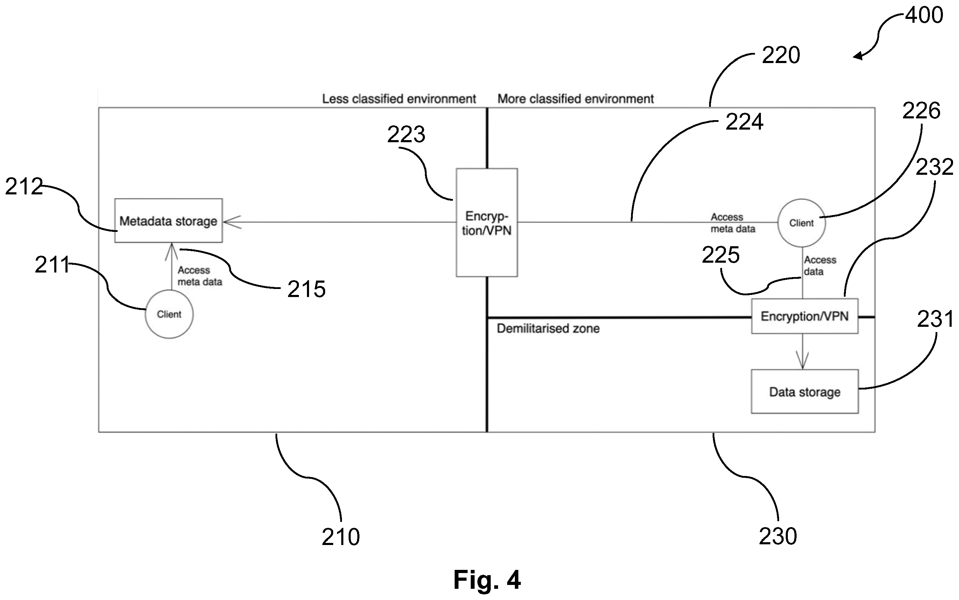

**Figure 4** shows a federated storage environment 400. The same reference numerals are used for the same or similar features. The federated storage environment 400 includes a second client device 226 that operates within the more classified environment 220. The client device 226 may access meta data stored in meta data storage 212 via a secure communication path 224 similar to the secure communication path 222. The federated storage environment 400 further includes a demilitarized zone 230 comprising a data storage 231, to which access is enabled only for client device 226 via secure communication channel 225 that is similar to secure communication channels 222 and 224, comprising an encrypted channel or VPN channel 232. Contrarily, client device 211 operating in the less classified environment 210 may not access data stored in data storage 231.

In the illustrated example, client device 211 may access meta data stored in the meta data storage 212 and is prevented from accessing any data stored in the more classified environment 220 or the demilitarised zone 230. In other words, in the illustrated example, access for the client device 211 to the data storage 231 is denied or prevented based on the classification level of the computing environment 210 in which device 211 operates and the classification level of the computing environment 230 in which the data subset is stored.

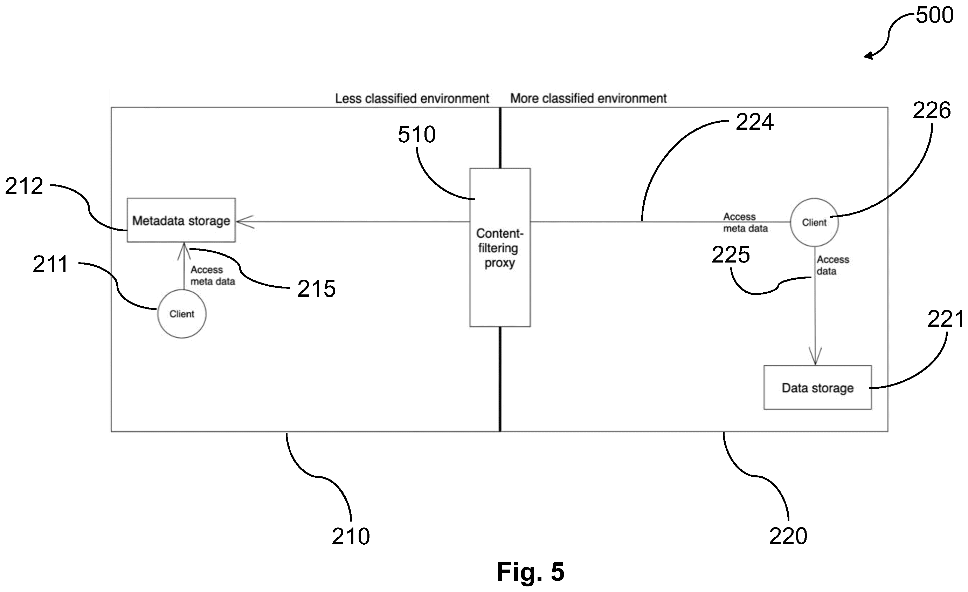

**Figure** 5 shows a federated storage environment 500. The same reference numerals are used for the same or similar features. In the illustrated example, communication path 225 is a direct (or open) communication path, as no classification boundaries are crossed. Communication path 224 in this example alternatively, or additionally, includes a filtering device 510, for example, a content filtering proxy, e.g., a Secure Domain Transition (SDoT) gateway. Any data that is transferred between the more classified environment 220 and the less classified environment 210 via the communication path 224 passes the filter device 510. The filter device 510 determines whether the information or data transferred between the more classified environment 220 and the less classified environment 210 adheres to a set of predefined filtering rules. The set of predefined filtering rules may govern what information may be transferred to the less classified environment 210, i.e. may get exfiltrated.

The client device 211 operating in the less classified computing environment 210 may access open meta data stored in the meta data storage 212 but may not allowed to access secret data in the more classified computing environment 220 that defines access restrictions. The client device 226 operating in the more classified (or secret) computing environment may access both open meta data and secret data. As mentioned above, meta data exchange between the client device 226 and the less classified environment 210 may be routed through the above mentioned content-filtering proxy 510. Secret data may be accessed by the client device 226 in the more classified computing environment 220 directly.

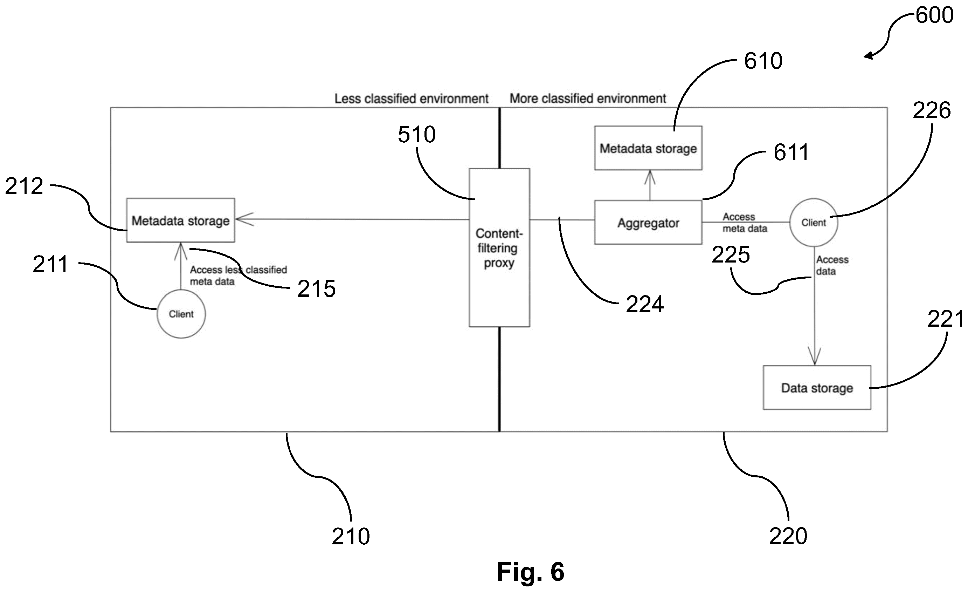

**Figure 6** shows a federated storage environment 600. The same reference numerals are used for the same or similar features. In addition to the federated storage environment 500 shown in figure 5, the federated storage environment 600 includes a meta data storage 610 located in the more classified computing environment 220. The meta data storage 610 stores secret or classified meta data, whereas the meta data storage 212 stores open meta data within the less classified computing environment 210. The client 226 may access both secret and open meta data, whereas the client 211 may only access open meta data. In addition, the client 226 may access data stored in the data storage 221, whereas the client 211 may be prevented from accessing the data stored in data storage 221. As explained with reference to figure 5, also in this illustrated example, any information flow between the more classified computing environment 220 to the less classified computing environment 210 must adhere to a set of predefined filtering rules that govern what information may get exfiltrated. Such filtering rules may be imposed by the filtering device 510.

Referring again to **figure 1**, if the client 226 requests a data set comprising subsets of both meta data stored in meta data storage 212 and meta data stored in meta data storage 610, both subsets of the requested data set comprising the open and secret meta data, respectively, are combined to a single subset of meta data. The step of combining said two subsets is performed in step 150 of method 100 shown in figure 1. The combining step may be performed by an aggregator 611 (e.g. a proxy). In other words, meta data exchange may be brokered by the aggregator 611 between the less classified computing environment 210 and the more classified computing environment 220 as well as, simultaneously, within the more classified computing environment 220.

The aggregator 611 enables a user of the client device 226 to enrich meta data of a particular requested data set with additional meta data stored in a different computing environment. In other words, the client device 226 may transparently access both open and secret meta data with a single data set request that lets the client connect with an aggregate data from infrastructure with varying, complex classification boundaries simultaneously.

Hence, different data subsets of a requested data set may be stored at different storage locations of different computing environments. Each of the data subsets may include, for example, meta data for one or more corresponding content data subset of the data set, or vice versa. When combining, in step 150, the plurality of data subsets of the requested data set, the meta data subsets may be combined or each meta data subset may be combined with the corresponding content data subset(s), or vice versa..

Alternatively, some or each of the data subsets may include, for example meta data for a plurality of, e.g. all, content data sets of the requested data set, or vice versa. When combining, in step 150, the plurality of data subsets of the requested data set, meta data from different meta data subsets that correspond to the same content data subset may be combined, in particular in a new data subset and/or content data subsets may be combined with corresponding meta data from different meta data subsets, or vice versa.

Put differently, when meta data is stored across different computing environments (i.e. if the meta data is split into different subsets), there may be two scenarios. The first is a vertical partition where each meta data subset contains all meta data for a dedicated (e.g., similarly classified) dataset. For example, one meta data subset may contain all meta data for one or multiple corresponding datasets, say datasets 1 and 2, while another meta data subset may contain all meta data for one or multiple other different datasets, say dataset 3. The aggregator 611 may combine the meta data for different datasets. The second approach is a horizontal partitioning, where each meta data subset contains a subset of meta data for a plurality or all datasets. For example, one meta data subset may contain (all) unclassified meta data for a dataset while another meta data subset may contain secret meta data for the same dataset. The aggregator then joins or combines the unclassified and secret subsets of meta data for a given dataset (or multiple datasets).

Data exchange between the aggregator 611 and the less classified environment 210 may additionally be routed through the filtering device 510.

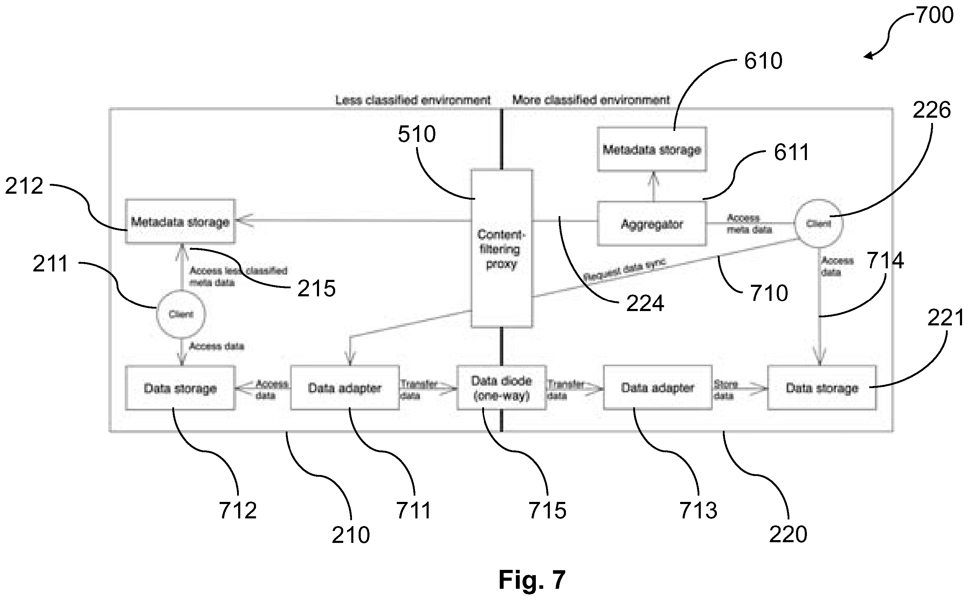

**Figure 7** shows a federated storage environment 700 similar to the federated storage environment 600 shown in figure 6. The same reference numerals are used for the same similar features.

In the illustrated example, any information flow between the more classified computing environment 220 to the less classified computing environment 210 must either adhere to a set of predefined filtering rules that govern what information may get exfiltrated - such filtering rules can be imposed, as described above, by the filtering device 510 - or be channeled through a one-way data diode 715 that allows for information flow from the less classified computing environment 210 to the more classified computing environment 220 only.

The client device 211 in the less classified computing environment 210 may access open meta data stored in meta data storage 212 and open data stored in data storage 712 but not secret meta data stored in the meta data storage 610 of the more classified computing environment 220 that defines access restrictions. Contrarily, the client device 226 in the more classified computing environment 220 may access open meta data, secret meta data, open data and secret data.

Again, as described above, meta data exchange may be brokered by the aggregator 611 between the less classified computing environment 210 and the more classified computing environment as well as, simultaneously, within the more classified computing environment. Data exchange between the aggregator 611 and a less classified computing environment 210 may additionally be routed through the above-mentioned filtering device 510.

To access open data, a client in the more classified computing environment 220 sends a request that may be routed through the filtering device 510 a first data adapter 711 in the less classified computing environment 210;. The first data adaptor 711 pulls data from the less classified computing environment 210 and channels it via the one-way data diode 715 to a second data adapter 713 in the more classified computing environment 220. The second data adapter 713 then stores or caches data in the more classified computing environment 220. In this manner, client device 226 may access the data originally stored in data storage 710 directly in the more classified environment 220 via a direct or open communication path 714.

Put yet another way: In the illustrated example, a request sent by the client 223 is transmitted via a secure communication path 710 comprising the content filtering proxy 612. As explained above, with reference to figure 6, the content filtering proxy, or more general the filtering device, 612 screens the transmitted information, i.e. the request, to prevent confidential information or data to be transmitted from the more classified computing environment 220 to the less classified computing environment 210. The request from the client device 226 is received by the first data adapter 711 within the less classified computing environment 210. Having received the request sent via communication path 710, the first data adapter 711 may pull data from data storage 712 and channel it via a one-way day-to-day and 2 a second data adapter 713 in the more classified environment, wherein the second data adapter 713 stores or caches the data in the data storage 221 of the more classified environment.

The client device 226 operating in the more classified environment 230 may access first, open meta data stored in the meta data storage 212 and second meta data stored in the meta data storage 610 as described with reference to figure 6.

### Further Exemplary Embodiments

1. A computer implemented method for enabling data access to a federated storage, the method comprising:
   receiving (110), from a client device operating in a first computing environment, a request for a data set stored in the federated storage, wherein the data set includes one or more data subsets;
   determining (120) a first classification level of the first computing environment and a respective second classification level of one or more second computing environments, the one or more data subsets of the requested data set each being stored in a corresponding storage location in one of the one or more second computing environments;
   based on the determined first and one or more second classification levels, in particular based on a comparison of the first and one or more second classification levels, enabling (160) or denying (170) access to the one or more data subsets of the requested data set for the client device.
2. The method of example 1, wherein enabling access to the one or more data subsets further includes:
   based on the determined first and one or more second classification levels, determining (140) a respective communication path from the one or more second computing environments to the first computing environment and/or from the corresponding storage locations to the client device; and
   enabling (160) access to the one or more data subsets of the requested data set for the client device via the determined respective communication paths.
3. The method of any of the preceding examples, wherein enabling or denying access to the one or more data subsets of the requested data set includes:
   selectively enabling (160) or denying (170) access to each of the one or more data subsets, in particular selectively enabling access to data subsets stored in different computing environments having different classification levels via different communications paths.
4. The method of any of the preceding examples, further comprising:
   determining (130) a respective access restriction to the corresponding storage locations, in particular to the one or more data subsets;
   wherein enabling (160) or denying (170) access to the one or more data subsets of the requested data set for the client device is further based on the determined access restrictions.
5. The method of any of the preceding examples, wherein a determined respective communication path, or the determined respective communication path, between the one or more second computing environments and the first computing environment and/or between the corresponding storage location and the client device includes a secure channel, in particular if the respective second classification level is higher than the first classification level or vice versa.
6. The method of any of the preceding examples, wherein a determined respective communication path, or the determined respective communication path, between the one or more second computing environments and the first computing environment and/or between the corresponding storage locations and the client device includes a filter device configured to prevent access to, preferably predefined, confidential information included in the request and/or the requested data set, in particular if the respective second classification level is higher than the first classification level or vice versa.
7. The method of any of the preceding examples, wherein a determined respective communication path, or the determined respective communication path, between the one or more second computing environments and the first computing environment and/or between the corresponding storage locations and the client device includes a data diode preventing data transmission from a more classified computing environment to a less classified computing environment, in particular if the respective second classification level is higher than the first classification level or vice versa.
8. The method of any of the preceding examples, wherein enabling access to the one or more data subsets of the requested data set includes:
   combining (150) a plurality of data subsets, in particular data subsets retrieved from different second computing environments; and
   enabling (160) access to the combined data subsets.
9. A federated storage access device comprising means for carrying out the method of any of the preceding examples.
10. A computer-readable medium comprising instructions which, when executed by a computer, cause the computer to carry out the method of any of examples 1-8.

## Claims

1. A computer implemented method for enabling data access to a federated storage, the method comprising:
receiving (110), from a client device operating in a first computing environment, a request for a data set stored in the federated storage, wherein the data set includes one or more data subsets;
determining (120) a first classification level of the first computing environment and a respective second classification level of one or more second computing environments, the one or more data subsets of the requested data set each being stored in a corresponding storage location in one of the one or more second computing environments; and
based on a comparison of the first and one or more second classification levels, selectively enabling (160) or denying (170) access to the one or more data subsets of the requested data set for the client device,
wherein a determined respective communication path between the one or more second computing environments and the first computing environment and/or between the corresponding storage locations and the client device includes a data diode preventing data transmission from a more classified computing environment to a less classified computing environment if the respective second classification level is higher than the first classification level, and
wherein enabling access to the one or more data subsets of the requested data set includes:
combining (150) a plurality of data subsets, in particular data subsets retrieved from different second computing environments having different classification levels; and
enabling (160) access to the combined data subsets.

2. The method of claim 1, wherein enabling access to the one or more data subsets further includes:
based on the determined first and one or more second classification levels, determining (140) a respective communication path from the one or more second computing environments to the first computing environment and/or from the corresponding storage locations to the client device; and
enabling (160) access to the one or more data subsets of the requested data set for the client device via the determined respective communication paths.

3. The method of any of the preceding claims, wherein enabling or denying access to the one or more data subsets of the requested data set includes:
selectively enabling (160) or denying (170) access to each of the one or more data subsets, in particular selectively enabling access to data subsets stored in different computing environments having different classification levels via different communications paths.

4. The method of any of the preceding claims, further comprising:
determining (130) a respective access restriction to the corresponding storage locations, in particular to the one or more data subsets;
wherein enabling (160) or denying (170) access to the one or more data subsets of the requested data set for the client device is further based on the determined access restrictions.

5. The method of any of the preceding claims, wherein a determined respective communication path, or the determined respective communication path, between the one or more second computing environments and the first computing environment and/or between the corresponding storage location and the client device includes a secure channel, in particular if the respective second classification level is higher than the first classification level or vice versa.

6. The method of any of the preceding claims, wherein a determined respective communication path, or the determined respective communication path, between the one or more second computing environments and the first computing environment and/or between the corresponding storage locations and the client device includes a filter device configured to prevent access to, preferably predefined, confidential information included in the request and/or the requested data set, in particular if the respective second classification level is higher than the first classification level or vice versa.

7. A federated storage access device comprising means for carrying out the method of any of the preceding claims.

8. A computer-readable medium comprising instructions which, when executed by a computer, cause the computer to carry out the method of any of claims 1-6.
